# EUROPEAN PATENT SPECIFICATION

(11) **EP 4 289 686 B1**
(45) Date of publication and mention of the grant of the patent: **28.01.2026**
(21) Application number: 23168640.3
(22) Date of filing: 19.04.2023
(51) Int. Cl.: B60R 25/25, B60R 25/30, B60R 25/33

(54) **VEHICLE THEFT DETERMINATION APPARATUS**
VORRICHTUNG ZUR BESTIMMUNG EINES FAHRZEUGDIEBSTAHLS
APPAREIL DE DÉTERMINATION DU VOL DE VÉHICULE

(30) Priority: 09.06.2022 JP 2022093886
(43) Date of publication of application: 13.12.2023
(73) Proprietor: Suzuki Motor Corporation, Hamamatsu-shi, Shizuoka 432-8611 (JP)
(72) Inventor: NAGASHIMA, Taira, Hamamatsu-shi, 432-8611 (JP); YAMANE, Ryuichi, Hamamatsu-shi, 432-8611 (JP)
(74) Representative: Plasseraud IP

(56) References cited:
- CN-A- 107 472 195
- CN-A- 113 722 688
- JP-A- 2004 190 380
- US-A1- 2019 009 788
- US-A1- 2021 331 647

## Description

### [Technical Field]

The present invention relates to a vehicle theft determination apparatus.

### [Background Art]

Patent Literature 1 describes that a configuration including a face image capturing camera, a face authentication control unit, and a car navigation control unit is adopted as a configuration of a personal authentication system for a vehicle. The face authentication control unit includes a threshold value setting unit that sets how large a threshold value used in face authentication is to be, and the car navigation control unit includes a time information acquisition unit, a vehicle position information acquisition unit, and a threshold value setting condition determination unit. Also, the threshold value setting condition determination unit is caused to compare time information and vehicle position information acquired by the time information acquisition unit and the vehicle position information acquisition unit with a threshold value setting condition and determine whether or not a condition under which the threshold value is to be changed has been met. Moreover, the threshold value setting unit is caused to change the threshold value from a default value on the basis of the determination result of the threshold value setting condition determination unit. US 2021/331647 discloses an in-vehicle biometric authentication system that performs driver authentication based on biometric information sensed by multiple biometric sensors.

### [Citation List][Patent Literature]

[Patent Literature 1] JP 2006-306191 A

### [Summary of Invention]

### [Problem to be Solved by the Invention]

Although it is possible to enhance crime preventive performance through face authentication, convenience may be degraded if a high threshold value used for determination in the face authentication is set. Therefore, Patent Literature 1 describes that the threshold value for determination in face authentication is lowered in a case in which position information of a vehicle indicates a predetermined position (home, for example).

On the other hand, there is a likelihood that sample information at the time of the face authentication may be passed to a third person through a photograph, an image, and the like. In a case in which theft of a vehicle has occurred at the predetermined position, crime preventive performance may be degraded because the threshold value used for determination in the face authentication is relatively low.

In view of such circumstances, an object of the present invention is to realize both convenience and crime preventive performance in authentication of a user of a vehicle.

### [Means for Solving the Problem]

In order to achieve the above object, a vehicle theft determination apparatus according to the present invention includes: a biological information acquisition unit that acquires biological information of a user of a vehicle; a determination unit that determines that the user is an authorized person in a case in which a first biological information similarity between acquired first biological information of the user and biological information registered in advance is equal to or greater than a first threshold value; and a driving feature acquisition unit that acquires driving features of the user who drives the vehicle, the biological information acquisition unit acquiring second biological information of the user if a driving feature similarity between the driving features acquired by the driving feature acquisition unit and driving features registered in advance is equal to or greater than a predetermined value in a case in which the first biological information similarity is less than the first threshold value, the determination unit determining that the user is the authorized person in a case in which a second biological information similarity between the second biological information and biological information registered in advance is equal to or greater than a second threshold value that is less than the first threshold value.

### [Advantageous Effect of Invention]

According to the present invention, it is possible to realize both convenience and crime preventive performance in authentication of a user of a vehicle.

### [Brief Description of Drawings]

[Figure 1] Figure 1 is a block diagram illustrating a configuration example of an in-vehicle system.
[Figure 2] Figure 2 is a flowchart illustrating processing performed by a vehicle theft determination apparatus.
[Figure 3] Figure 3 is a block diagram illustrating a configuration example of computer hardware of the vehicle theft determination apparatus.

### [Mode for Carrying Out the Invention]

Hereinafter, the present invention will be described on the basis of illustrated embodiments. However, the present invention is not limited to the embodiments described below.

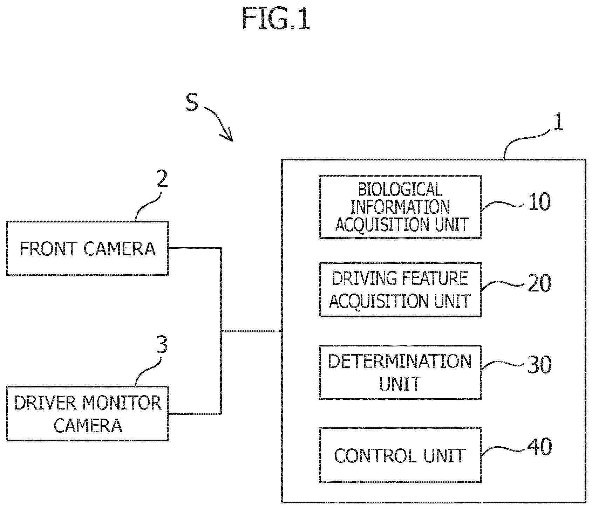

As illustrated in Figure 1, a vehicle system S includes a vehicle theft determination apparatus 1 and a front camera 2 and a driver monitor camera 3 that are connected to the vehicle theft determination apparatus 1. The vehicle theft determination apparatus 1 includes a biological information acquisition unit 10, a driving feature acquisition unit 20, a determination unit 30, and a control unit 40. Processing performed by each unit will be described later.

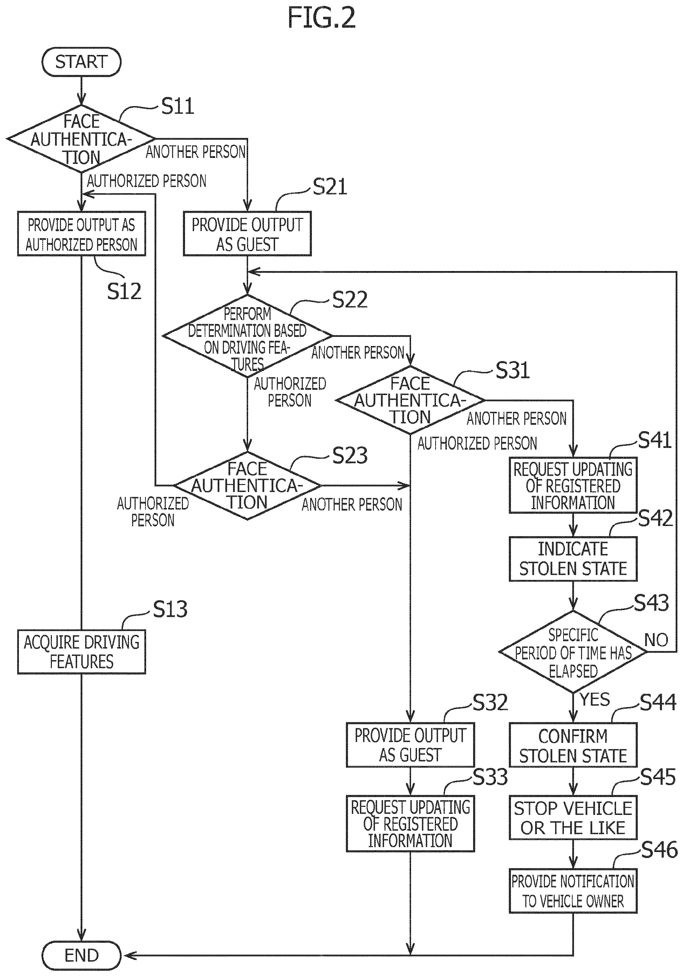

Figure 2 illustrates a flow of processing performed by the vehicle theft determination apparatus 1.

First, in step S11, the biological information acquisition unit 10 acquires first face image data of a user of a vehicle captured by the driver monitor camera 3. The determination unit 30 calculates a similarity between the first face image data and face image data of an authorized person (a person who has a legitimate right to use the vehicle, such as an owner of the vehicle) registered in advance and determines whether the similarity is equal to or greater than a first threshold value. The first threshold value is a threshold value that is greater than a second threshold value and a third threshold value, which will be described later. Step S12 is performed next in a case in which the calculated similarity is equal to or greater than the first threshold value, or otherwise, step S21 is performed next.

In step S12, the determination unit 30 determines that the user is the authorized person. Then, step S13 is performed.

In step S13, the driving feature acquisition unit 20 acquires driving features (driving habits) of the user who has been determined to be the authorized person.

The acquisition of the driving features includes the following processing.

### 1. Determination of high-frequency route

Routes corresponding to top 30%, for example, from among routes that the vehicle driven by the user who has been determined to be the authorized person travels are saved in the order from the highest traveling frequency. The numerical value of the top 30% is an example and can be changed in accordance with the specification of the navigation system mounted in the vehicle.

### 2. Reading of road features of high-frequency roads

Examples of the road features to be read are as follows.
- Speed limit
- Occurrence of state of congestion
- Road gradient
- Presence/absence of pedestrian crossing, signals, and intersections
- Presence/absence of stop signs and presence/absence of tunnels
- Time zones, countries where corresponding roads are present, numbers of lanes, types of roads, and geographical locations

### 3. Reading of front camera information

Examples of information obtained from the front camera 2 are as follows.
- Inter-vehicle distance from vehicle ahead
- State of road signal
- Operating frequency of each system
- Setting features of each system
- Other information recognized by front camera 2

### 4. Acquisition of driving features

Machine learning is performed using road features of high-frequency routes, front camera information, and vehicle information (vehicle speeds, yaw rates, vehicle body acceleration rates, whether or not the brake has been operated, rates of change in accelerator position, and the like). Examples of driving features acquired by a learned model are as follows. However, these are just examples, and the driving features are not limited to these examples since calculation of features is also performed by a machine in a case in which a deep neural network (DNN) technique or the like is used.
- Rates of change in accelerator position and vehicle speeds before and after pedestrian crossing
- Yaw rates or rates of change in yaw rate at the time of turning right and left at intersections
- Rates of change in accelerator positions before and after slopes
- Average vehicle speed at specific section
- Vehicle acceleration rates before and after intersections
- Distances, vehicle acceleration rates, vehicle speeds, and distribution of stop positions to stop signs
- Vehicle speed setting after main switch of adaptive cruise control (ACC) is turned on, speeds until accelerator is turned off, and the like

Note that at the time of traveling a route with a low traveling frequency, there is a likelihood that a lot of noise may be included in the original driving features, and it is possible to determine not to acquire the driving features. Also, although the acquired driving features are registered in the in-vehicle system, it is possible to determine not to disclose the registered driving features to the authorized person as well.

If step S13 is completed, the processing ends.

In a case in which the similarity calculated in step S11 is less than the first threshold value, step S21 is performed next as described above. In step S21, the determination unit 30 determines that the user is a guest user. The guest user is a user for whom available functions of the vehicle are limited as compared with the authorized person. Then, step S22 is performed.

Step S22 is a step on the assumption that step S13 has been executed at least once beforehand. In step S22, the driving information acquisition unit 20 acquires the driving features of the user who has been determined to be a guest user. Then, the determination unit 30 calculates a similarity between the driving features of the user who has been determined to be a guest user acquired by the driving information acquisition unit 20 and the driving features of the user who has been determined to be the authorized person acquired in step S13. Step S23 is performed next on the assumption that the user may be the authorized person in a case in which the calculated similarity is equal to or greater than a predetermined value, or otherwise, step S31 is performed next.

In step S23, the biological information acquisition unit 10 acquires second face image data of the user captured by the driver monitor camera 3 at a timing later than step S11. The determination unit 30 calculates a similarity between the second face image data and the face image data of the authorized person registered in advance and determines whether the similarity is equal to or greater than a second threshold value. The second threshold value is a threshold value that is less than the first threshold value in step S11. Step S12 is performed next in a case in which the calculated similarity is equal to or greater than the second threshold value, or otherwise, step S32 is performed next.

If it is determined in step S22 that the driving features of the user who has been determined not to be the authorized person in steps S11 and S21 are similar to the driving features of the authorized person to some extent, and less strict face authentication than that in step S11 is passed in step S23, the user is determined to be the authorized person in step S12.

The face authentication in step S23 can be performed only in a partial region of the face, such as image information of the eyes of the user, instead of the entire face. A threshold value in the face authentication in step S23 is lower than that in the face authentication in step S11, and determination is less strict in the face authentication in step S23 than in the face authentication in step S11, for example, in a level in which the user wearing a mask can pass the authentication.

The face authentication in step S23 is performed separately from step S11 after step S22 (determination based on the driving features) in order to prepare for a likelihood that driving features of a thief are determined to be similar to those of the authorized person by accident.

In a case in which the similarity calculated in step S22 is less than the predetermined value, step S31 is performed next as described above. In step S31, the biological information acquisition unit 10 acquires third face image data of the user captured by the driver monitor camera 3 at a timing later than step S11. The determination unit 30 calculates a similarity between the third face image data and the face image data of the authorized person registered in advance and determines whether the similarity is equal to or greater than a third threshold value. The third threshold value is a threshold value that is less than the first threshold value in step S11 and is greater than the second threshold value in step S23. Step S32 is performed next in a case in which the calculated similarity is equal to or greater than the third threshold value, or otherwise, step S41 is performed next.

In this manner, face authentication that is separate from that in step S11 is performed in step S31 even in a case in which the driving features acquired in step S22 are determined to be different from those of the authorized person. This is because it is technically quite difficult to distinguish a case in which an authorized person is driving differently from an ordinary driving manner due to an internal factor (a sense of urgency) or the like from a case in which a thief is driving.

In step S32, the determination unit 30 determines that the user is a guest user again. Then, step S33 is performed.

In step S33, the control unit 40 requests updating of registered information from the user through display of a message on an in-vehicle monitor or the like. Thereafter, the processing ends.

In a case in which the similarity calculated in step S31 is less than the third threshold value, step S41 is performed next as described above. In step S41, the control unit 40 requests updating of registered information from the user through display of a message on the in-vehicle monitor or the like. Step S42 is performed next.

In step S42, the determination unit 30 indicates to the user that the vehicle may have been stolen. The indication can be performed through display of a message on the in-vehicle monitor or the like. Step S43 is performed next.

In step S43, the determination unit 30 determines whether a specific period of time has elapsed after the indication in step S42. Step S44 is performed next in a case in which it is determined that the specific period of time has elapsed, or otherwise, step S22 is performed again. Note that in a case in which step S42 has been performed a plurality of times in the same ignition cycle, whether the specific period of time has elapsed after the first execution of the step is determined in step S43.

In step S44, the determination unit 30 determines that the vehicle is in a stolen state. Step S45 is performed next.

In step S45, the control unit 40 sends a command to an electric steering, a brake mechanism, and the like of the vehicle and forcibly cause the vehicle to stop. Step S46 is performed next.

In step S46, the control unit 40 notifies the owner of the vehicle of the fact that the vehicle is in the stolen state and the vehicle is being forcibly stopped. The notification can be made through transmission of an email to an email address of the owner or the like. Thereafter, the processing ends.

In this manner, in a case in which the person has not been determined to be the authorized person in both step S22 (determination based on the driving features) and step S31 (face authentication using the third threshold value), step S41 (request for updating of the registered information) is performed. It is possible to encourage the user to take off the mask that the user has worn or to be relaxed for now, or the like in step S41. If a specific period of time has elapsed from step S42 (indication of the stolen state), then step S44 (confirmation of the stolen state) is performed, and step S45 (forcible stopping of the vehicle) is performed.

Cases in which the user is conclusively determined to be the authorized person in the processing in Figure 2 are as follows.
- A case in which the user is authenticated as the authorized person in step S11 (face authentication)
- A case in which the user is authenticated as the authorized person in step S22 (determination based on driving features) and step S23 (face authentication) although the user is not authenticated as the authorized person in step S11 (face authentication)

Cases in which the user is conclusively determined to be a guest user in the processing in Figure 2 are as follows.
- A case in which the user is not authenticated as the authorized person in step S11 (face authentication), is authenticated as the authorized person in step S22 (determination based on driving features), and is not authenticated as the authorized person in step S23 (face authentication)
- A case in which the user is not authenticated as the authorized person in both steps, namely step S11 (face authentication) and step S22 (determination based on driving features) and the user is authenticated as the authorized person in step S31 (face authentication)

Cases in which there is determined to be a likelihood of vehicle theft in the processing in Figure 2 are as follows.
- A case in which the user is determined not to be the authorized person in a total of three steps, namely step S11 (face authentication), step S22 (determination based on driving features), and step S31 (face authentication)

In a case in which it is determined that there is a likelihood of theft, a user's attention is attracted to update the registered information in step S41 (request for updating of registered information). The updating of the registered information requires confirmation of the identification of the authorized person using a password instead of face authentication.

Also, it is necessary for the updating of the registered information to be performed under the following conditions on the basis of position information on a map.

In a case in which the road that the vehicle is traveling is a highway or a toll road, it is necessary for the updating of the registered information to be performed within 32 km from the vehicle position at the time when the request in step S41 is issued or before arrival at two parking areas (PA) or serviced areas (SA) ahead.

In a case in which the updating is not performed under such a condition, shift to a forced automatic driving mode is performed until the closest interchange (IC), PA or SA, the vehicle is caused to enter any ramp and stop at a position where the vehicle can stop or a position where the vehicle can be parked.

Also, the shift to the forced automatic driving mode is displayed on an information display device in the car at this time.

Alternatively, a device such as a smartphone that the user has registered in advance is notified of the current position of the vehicle and the shift to the forced automatic driving mode.

In a case in which the road that the vehicle is traveling on is a driveway that is neither a highway nor a toll road, it is necessary for the updating of the registered information to be performed before the vehicle arrives at the two ICs ahead from the vehicle position at the timing at which the request in step S41 is issued.

In a case in which the updating is not performed under such a condition, shift to the forced automatic driving mode is performed, and the vehicle is caused to enter the ramp of the closest IC. The automatic driving control is continued even when the vehicle is in the rampway, and shift to theft confirmation processing (which will be described later) on an ordinary road in order to receive information regarding the ordinary road from map information.

Also, the shift to the forced automatic driving mode is displayed on the information display device in the vehicle at this time.

Alternatively, a device such as a smartphone that the user has registered in advance is notified of the current position of the vehicle and the shift to the forced automatic driving mode.

In a case in which the road that the vehicle is traveling is an ordinary road instead of a driveway, it is necessary for the updating of the registered information to be performed before the vehicle arrives at a store such as a closest convenience store or a gas station in business hours after receiving road type information of the ordinary road. The updating of the registered information may be determined to be required to be performed before the vehicle finishes traveling a total distance of the distance to arrive at the store and a predetermined distance (a predetermined distance that the user can set in advance).

In a case in which the vehicle stops or is parked at a location outside a road before it arrives at the store or when it is traveling to reach the total distance and the shift position is changed to parking, it is possible to lock the shift lever until the registered information is updated. Also, the registered device of the user may be notified of the fact that the shift lever has been locked.

In a case in which the updating has not been performed under such a condition, automatic driving control is performed up to the closest convenience store or the closest gas station in business hours, and parking control is performed at a position where the vehicle can stop or be parked. However, in a case in which the distance to the above facility is equal to or greater than 15 km, the vehicle is brought to an emergency stop as soon as a space on the road where the vehicle can stop or be parked is detected by the front camera mounted in the vehicle.

Also, the information display device in the vehicle is notified of the shift to the automatic driving mode at this time.

Alternatively, a device such as a smartphone that the user has registered in advance is notified of the current position of the vehicle and the shift to the automatic driving mode.

Note that a plurality of distances such as a "long distance", a "middle distance", and a "short distance" can be provided as the distance to confirm a theft such that the authorized person can select one of them in advance.

Hereinafter, control at the time of a theft will be described.

### How to determine traveling distance

PAs of highways are placed at intervals of about 15 km. Therefore, 32 km which is a sum of the distance (30 km) corresponding to the two intervals and a safety margin (2 km) is set as a traveling available distance.

Also, the vehicle is not allowed to travel to the closest PA, SA, or IC because it may be difficult or dangerous to enter the PA in a case in which the point at which the vehicle is brought into the state requiring the updating of the registered information is 100 m before an entrance (ramp) of the PA and the vehicle is traveling in the right lane, for example. Therefore, the vehicle is allowed to travel to the two PAs or SAs ahead.

A total distance of the distance to the closest convenience store or gas station and the safety margin (2km) may be set as the traveling available distance.

### Reason of distinction depending on road types

A reason of distinction depending on the road types is to enable determination regarding whether or not the vehicle may stop at a road shoulder when a theft is confirmed and forced shift to stop control is carried out. There are considered to be no problems if the vehicle stops even at a highway in a case of emergency. However, in a case in which a theft has been confirmed due to erroneous determination and the shift to the stop control has been carried out, for example, it is difficult to consider that the state is an emergency state. Therefore, a road type is acquired, and a range in which the user can effortlessly stop the car in a safe manner is set in accordance with the road type.

The processing illustrated in Figure 2 can be performed regularly (every five minutes, for example).

According to the embodiment as described above, the following effects can be obtained.
- It is possible to further enhance reliability by the processing illustrated in Figure 2 being performed regularly. In contrast, in a case in which face authentication is performed only when the ignition is turned on, there is a likelihood that the face authentication can be improperly passed using a photograph of a face or the like. Also, it is possible to confirm the identification of the authorized person even during driving even if the authentication failed the first time, by the processing illustrated in Figure 2 being performed regularly.
- However, if this is thoroughly performed, the user is required to always drive in the same face state as that at the time of the registration in the vehicle, and the user cannot receive benefits of the confirmation of the identification of the authorized person in a different state from that at the time of the registration.
- It is possible to continuously use the vehicle through determination of driving features as long as the user drives the vehicle as usual even if the face state is different from the state at the time of the registration. Also, there is no need to register face information again.
- In a case of adopting only face authentication using a relatively low threshold value, the probability that a person who is not the authorized person is erroneously recognized as the authorized person (other person accepting rate) increases, and reliability for utilization in theft prevention is not achieved. According to the above embodiment, degradation of reliability due to the face authentication using the low threshold value is addressed by using the map and the front camera to perform determination based on driving features as well.
- People cannot drive vehicles as usual on unfamiliar roads in many cases, and such cases are thus excluded from the calculation of the driving features of the authorized person to enable more accurate feature extraction.
- Since driving features are more abstract features than face features, the driving features are effective as keys that are unlikely to be stolen by others.

According to the above embodiment, it is possible to realize both convenience and crime preventive performance in authentication of a user of a vehicle as described above.

### Other Modes

For example, a flow for referring to past data in the same ignition cycle may be added. In a case in which a rate of the determination as the authorized person is high in the same ignition cycle and step S23 (face authentication) is passed, it is possible to reduce inconvenience accompanying erroneous determination by adding processing to lower the determination threshold value for the first traveling route or for long-time driving.

The calculation of driving features is not limited to routes with high utilization rates, and the calculation may be performed for routes that the authorized person has reported.

It is also possible to realize a system that offers a break to the user when a similarity to the driving features of the authorized person is relatively low even in a case in which step S11 (face authentication) is passed.

It is also possible to calculate a driving score by comparing the acquired driving features with driving features that are considered to be features of safe driving.

It is also possible to perform stepwise authentication by breaking down the strictness of the determination in face authentication.

The present invention is not limited to the face authentication, and can utilize other biological authentication such as fingerprint authentication, iris authentication, or voice pattern authentication. Note that, in regard to the face authentication, an additional component is not needed for a vehicle provided with a driver monitoring camera (a dedicated component is needed for fingerprint authentication), information can be easily acquired (although information is acquired by a camera for iris authentication as well, restriction of an installation position thereof is strict), and high accuracy is achieved (it is generally considered to be more accurate than voice pattern authentication). Therefore, the face authentication is more advantageous than the other biological authentication.

In a case of determination as a guest user, basic functions as a car, such as traveling, turning, and stopping can be used. In a case of determination as the authorized person, services other than the vehicle traveling (for example, various approval services, changes in various vehicle settings (including the registration of the authorized-person information in the above embodiment), automatic driving functions, transition to a chargeable state, utilization of the Internet, ETC card lock, utilization of accessories such as a car navigation and a smartphone charging, and the like) can be utilized.

On the assumption of utilization by family members of the vehicle owner, persons who are registered by the authorized person in advance can use the authentication-based services. Also, in a case in which the vehicle is temporarily rented (to a hotel worker or the like), a mode in which theft determination is not performed within a specific traveling distance (about 2 km) may be able to be set. In a case in which the vehicle is rented (to a dealer or the like) for a long period of time, the theft determination may be stopped by setting a release key using a USB or the like such that the person can use the vehicle as a guest user.

A plurality of points may be set when the user is determined to be the authorized person, and the similarity of the driving features may be determined to be equal to or greater than the predetermined value by passing through the set points in the determined order.

The predetermined distance to the forced stop may not only be able to be determined in an automatic manner on the basis of the road information, but may also be able to be set by the user.

The predetermined position of the forced stop is not a position on a road, and an IC, a PA, or an SA is conceivable in a case of a highway or the like, or a convenience store, a gas station, or the like is conceivable in a case of an ordinary road. Such positions are determined by the camera or on the basis of the map information.

Position information of the vehicle may be transmitted to a user's terminal when the vehicle is stopped at the predetermined position.

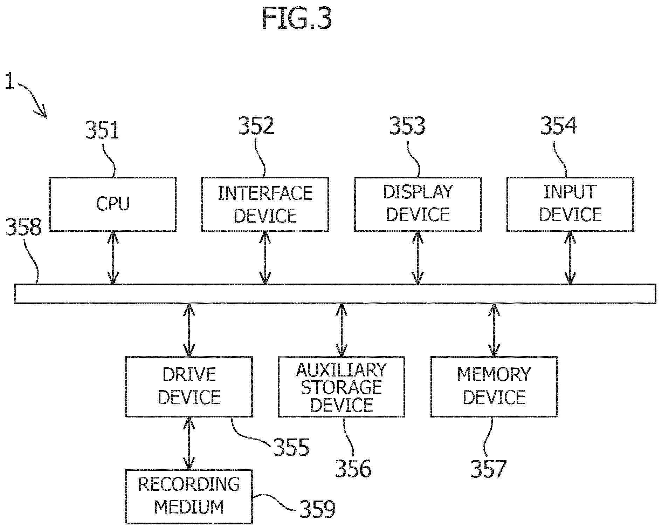

Figure 3 illustrates a computer hardware configuration example of the vehicle theft determination apparatus 1. The apparatus includes a CPU 351, an interface device 352, a display device 353, an input device 354, a drive device 355, an auxiliary storage device 356, and a memory device 357, and these are connected to each other via a bus 358.

A program for realizing the functions of the present apparatus is provided by a recording medium 359 such as a CD-ROM. If the recording medium 359 recording the program is set in the drive device 355, the program is installed in the auxiliary storage device 356 from the recording medium 359 via the drive device 355. Alternatively, the installation of the program is not necessarily performed using the recording medium 359 and can also be performed through a network. The auxiliary storage device 356 stores the installed program and stores necessary files, data, and the like.

The memory device 357 reads the program from the auxiliary storage device 356 and stores the program in a case in which an instruction for activating the program is provided. The CPU 351 realizes the functions of the vehicle theft determination apparatus in accordance with the program stored in the memory device 357. The interface device 352 is used as an interface for establishing connection to another computer through a network. The display device 353 displays a graphical user interface (GUI) or the like according to the program. The input device 354 includes a keyboard, a mouse, a touch panel, and the like.

Although embodiments of the present invention have been described above, the present invention is not limited to the embodiments that have already been described, and various modifications and changes can be made on the basis of the technical idea of the present invention. The invention is defined by the appended claims.

### [Reference Signs List]

- S: In-vehicle system
- 1: Vehicle theft determination apparatus
- 2: Front camera
- 3: Driver monitor camera
- 10: Biological information acquisition unit
- 20: Driving feature acquisition unit
- 30: Determination unit
- 40: Control unit

## Claims

1. A vehicle theft determination apparatus (1) comprising:
a biological information acquisition unit (10) that acquires biological information of a user of a vehicle;
a determination unit (30) that determines that the user is an authorized person in a case in which a first biological information similarity between acquired first biological information of the user and biological information registered in advance is equal to or greater than a first threshold value; and
a driving feature acquisition unit (20) that acquires driving features of the user who drives the vehicle, wherein
the biological information acquisition unit acquires second biological information of the user if a driving feature similarity between the driving features acquired by the driving feature acquisition unit and driving features registered in advance is equal to or greater than a predetermined value in a case in which the first biological information similarity is less than the first threshold value (S11, S22), and
the determination unit determines that the user is the authorized person in a case in which a second biological information similarity between the second biological information and the biological information registered in advance is equal to or greater than a second threshold value that is less than the first threshold value (S23, S12).

2. The vehicle theft determination apparatus as claimed in claim 1, wherein the determination unit determines that the user is a guest user for whom available functions of the vehicle are limited as compared with the authorized person in a case in which the second biological information similarity is less than the second threshold value (S32).

3. The vehicle theft determination apparatus as claimed in claim 1 or 2, wherein
the biological information acquisition unit acquires third biological information of the user in a case in which the driving feature similarity is less than the predetermined value (S22, S31), and
the determination unit determines that the user is a guest user for whom available functions of the vehicle are limited as compared with the authorized person in a case in which a third biological information similarity between the third biological information and the biological information registered in advance is equal to or greater than a third threshold value that is less than the first threshold value and is greater than the second threshold value (S32).

4. The vehicle theft determination apparatus as claimed in claim 3, wherein the determination unit determines that there is a likelihood that the vehicle has been stolen in a case in which the third biological information similarity is less than the third threshold value (S42).

5. The vehicle theft determination apparatus as claimed in claim 1 or 2, wherein the second threshold value is set to a lesser value as the driving feature similarity is a greater value.

6. The vehicle theft determination apparatus as claimed in claim 1 or 2, wherein
the driving features registered in advance (S13) relate to a specific route that the vehicle driven by a person who has been determined to be the authorized person has traveled, and
the driving feature similarity is a similarity between a route that the vehicle driven by the user travels and the specific route.

## Patentansprüche

1. Fahrzeugdiebstahl-Bestimmungsvorrichtung (1), umfassend:
eine biologische Informationsaufnahme-Einheit (10), welche biologische Informationen eines Benutzers eines Fahrzeugs aufnimmt;
eine Bestimmungseinheit (30), welche bestimmt, dass der Benutzer eine autorisierte Person ist, in einem Fall, in welchem eine erste biologische Informationsähnlichkeit zwischen aufgenommenen ersten biologischen Informationen des Benutzers und biologischen Informationen, welche zuvor registriert worden sind, gleich oder größer als ein erster Schwellenwert ist; und
eine Fahrmerkmal-Aufnahmeeinheit (20), welche Fahrmerkmale des Benutzers aufnimmt, welcher das Fahrzeug fährt, wobei
die biologische Informationsaufnahme-Einheit zweite biologische Informationen des Benutzers aufnimmt, wenn eine Fahrmerkmal-Ähnlichkeit zwischen den Fahrmerkmalen, welche von der Fahrmerkmal-Aufnahmeeinheit aufgenommen werden, und Fahrmerkmalen, welche zuvor registriert worden sind, gleich oder größer als ein vorbestimmter Wert in einem Fall ist, in welchem die erste biologische Informationsähnlichkeit kleiner als der erste Schwellenwert ist (S11, S22), und
die Bestimmungseinheit bestimmt, dass der Benutzer die autorisierte Person ist, in einem Fall, in welchem eine zweite biologische Informationsähnlichkeit zwischen den zweiten biologischen Informationen und den biologischen Informationen, welche zuvor registriert worden sind, gleich oder größer als ein zweiter Schwellenwert ist, welcher kleiner als der erste Schwellenwert ist (S23, S12).

2. Fahrzeugdiebstahl-Bestimmungsvorrichtung nach Anspruch 1, wobei die Bestimmungseinheit bestimmt, dass der Benutzer ein Gastbenutzer ist, für welchen verfügbare Funktionen des Fahrzeugs verglichen mit der autorisierten Person begrenzt sind, in einem Fall, in welchem die zweite biologische Informationsähnlichkeit kleiner als der zweite Schwellenwert ist (S32).

3. Fahrzeugdiebstahl-Bestimmungsvorrichtung nach Anspruch 1 oder 2, wobei die biologische Informationsaufnahme-Einheit dritte biologische Informationen des Benutzers in einem Fall aufnimmt, in welchem die Fahrmerkmal-Ähnlichkeit kleiner als der vorbestimmte Wert ist (S22, S31), und
die Bestimmungseinheit bestimmt, dass der Benutzer ein Gastbenutzer ist, für welchen verfügbare Funktionen des Fahrzeugs verglichen mit der autorisierten Person begrenzt sind, in einem Fall, in welchem eine dritte biologische Informationsähnlichkeit zwischen den dritten biologischen Informationen und den biologischen Informationen, welche zuvor registriert worden sind, gleich oder größer als ein dritter Schwellenwert ist, welcher kleiner als der erste Schwellenwert und größer als der zweite Schwellenwert ist (S32).

4. Fahrzeugdiebstahl-Bestimmungsvorrichtung nach Anspruch 3, wobei die Bestimmungseinheit bestimmt, dass eine Wahrscheinlichkeit vorliegt, dass das Fahrzeug gestohlen worden ist, in einem Fall, in welchem die dritte biologische Informationsähnlichkeit kleiner als der dritte Schwellenwert ist (S42).

5. Fahrzeugdiebstahl-Bestimmungsvorrichtung nach Anspruch 1 oder 2, wobei der zweite Schwellenwert auf einen kleineren Wert festgelegt ist, wenn die Fahrmerkmal-Ähnlichkeit ein größerer Wert ist.

6. Fahrzeugdiebstahl-Bestimmungsvorrichtung nach Anspruch 1 oder 2, wobei sich die zuvor registrierten Fahrmerkmale (S13) auf eine spezifische Route beziehen, welche das Fahrzeug gefahren von einer Person zurückgelegt hat, von welcher bestimmt worden ist, dass sie die autorisierte Person ist, und
die Fahrmerkmal-Ähnlichkeit eine Ähnlichkeit zwischen einer Route, welche das Fahrzeug gefahren von dem Benutzer zurücklegt, und der spezifischen Route ist.

## Revendications

1. Appareil de détermination de vol de véhicule (1) comprenant :
une unité d'acquisition d'informations biologiques (10) qui acquiert des informations biologiques d'un utilisateur d'un véhicule ;
une unité de détermination (30) qui détermine que l'utilisateur est une personne autorisée dans le cas où une similitude de premières informations biologiques entre des premières informations biologiques acquises de l'utilisateur et des informations biologiques enregistrées à l'avance est égale ou supérieure à une première valeur seuil ; et
une unité d'acquisition de caractéristiques de conduite (20) qui acquiert des caractéristiques de conduite de l'utilisateur qui conduit le véhicule, dans lequel
l'unité d'acquisition d'informations biologiques acquiert des deuxièmes informations biologiques de l'utilisateur si une similitude de caractéristiques de conduite entre les caractéristiques de conduite acquises par l'unité d'acquisition de caractéristiques de conduite et des caractéristiques de conduite enregistrées à l'avance est égale ou supérieure à une valeur prédéterminée dans le cas où la similitude de premières informations biologiques est inférieure à la première valeur seuil (S11, S22), et
l'unité de détermination détermine que l'utilisateur est la personne autorisée dans un cas où une similitude de deuxièmes informations biologiques entre les deuxièmes informations biologiques et les informations biologiques enregistrées à l'avance est égale ou supérieure à une deuxième valeur seuil qui est inférieure à la première valeur seuil (S23, S12).

2. Appareil de détermination de vol de véhicule selon la revendication 1, dans lequel l'unité de détermination détermine que l'utilisateur est un utilisateur invité pour lequel les fonctions disponibles du véhicule sont limitées par rapport à celles de la personne autorisée dans le cas où la similitude de deuxièmes informations biologiques est inférieure à la deuxième valeur seuil (S32).

3. Appareil de détermination de vol de véhicule selon la revendication 1 ou 2, dans lequel
l'unité d'acquisition d'informations biologiques acquiert des troisièmes informations biologiques de l'utilisateur dans le cas où la similitude de caractéristiques de conduite est inférieure à la valeur (S22, S31) prédéterminée, et
l'unité de détermination détermine que l'utilisateur est un utilisateur invité pour lequel les fonctions disponibles du véhicule sont limitées par rapport à celles de la personne autorisée dans le cas où une similitude de troisièmes informations biologiques entre les troisièmes informations biologiques et les informations biologiques enregistrées à l'avance est égale ou supérieure à une troisième valeur seuil, qui est inférieure à la première valeur seuil et est supérieure à la deuxième valeur seuil (S32).

4. Appareil de détermination de vol de véhicule selon la revendication 3, dans lequel l'unité de détermination détermine qu'il existe une probabilité que le véhicule ait été volé dans le cas où la similitude de troisièmes informations biologiques est inférieure à la troisième valeur seuil (S42).

5. Appareil de détermination de vol de véhicule selon la revendication 1 ou 2, dans lequel la deuxième valeur seuil est réglée sur une valeur inférieure étant donné que la similitude de caractéristiques de conduite est une valeur supérieure.

6. Appareil de détermination de vol de véhicule selon la revendication 1 ou 2, dans lequel
les caractéristiques de conduite enregistrées à l'avance (S13) se rapportent à un itinéraire spécifique parcouru par le véhicule conduit par une personne qui a été déterminée comme étant la personne autorisée, et
la similitude de caractéristiques de conduite est une similitude entre un itinéraire emprunté par le véhicule conduit par l'utilisateur et l'itinéraire spécifique.
